# EUROPÄISCHE PATENTSCHRIFT

(11) **EP 2 669 035 B1**
(45) Veröffentlichungstag und Bekanntmachung des Hinweises auf die Patenterteilung: **25.03.2015**
(21) Anmeldenummer: 12006933.1
(22) Anmeldetag: 06.10.2012
(51) Int. Cl.: B23D 59/00, B27B 17/02

(54) **Arbeitsgerät mit Kettenraddeckel**
Power tool with chain wheel cover
Appareil de travail avec capot pour roue d'entraînement

(30) Priorität: 31.05.2012 DE 102012010963
(43) Veröffentlichungstag der Anmeldung: 04.12.2013
(73) Patentinhaber: Andreas Stihl AG & Co. KG, 71336 Waiblingen (DE)
(72) Erfinder: Kapinsky, Ulrich, 71334 Waiblingen (DE); Zimmermann, Helmut, 73663 Berglen (DE); Oerding, Jochen, Dr., 71640 Ludwigsburg (DE)
(74) Vertreter: Reinhardt, Annette

(56) Entgegenhaltungen:
- DE-A1- 10 050 732
- DE-A1- 19 753 360
- DE-A1-102007 045 240
- DE-U1-202011 051 060
- US-A- 2 348 612
- US-A- 4 382 334

## Beschreibung

Die Erfindung betrifft ein Arbeitsgerät mit einem Kettenraddeckel der im Oberbegriff des Anspruchs 1 angegebenen Gattung, das aus dem Dokument US 2 348 612 A bekannt ist.

Aus der DE 1 933 366 U ist ein Arbeitsgerät, nämlich eine Motorsäge mit einer Führungsschiene und einem Kettenraddeckel bekannt. Um eine gute Abfuhr der Späne zu erreichen, sind bei der DE 1 933 366 U Aussparungen am Umfang des Antriebsrads vorgesehen. In dem Bereich, in dem keine Aussparungen vorgesehen sind, ist ein großer Abstand zwischen der Umfangswand des Kettenradraums und dem Dach der Sägekette gebildet.

Es hat sich gezeigt, dass insbesondere beim Schneiden von langfaserigem Material oder beim Ausführen von Längsschnitten der zwischen Sägekette und Kettenraddeckel gebildete Raum verstopfen und sich mit Schnittgut zusetzen kann. Dieser Bereich muss von der Sägekette permanent frei geräumt werden, wodurch die Schnittleistung sinkt. Ist der Bereich vollständig verstopft, so muss der Bediener den Kettenradraum reinigen.

Aus der DE 197 53 360 B4 ist es bekannt, bei einem Hochentaster die Auswurföffnung seitlich der Sägekette anzuordnen. Um das Schnittgut seitlich auszuwerfen, ist eine zur Antriebsachse geneigte Umfangswand benachbart zur Auswurföffnung vorgesehen. Vorlaufend und nachlaufend zur Auswurföffnung ist ein großer Abstand zwischen Sägekette und Umfangswand des Kettenrads gebildet.

Die US 2,348,612 zeigt eine Motorsäge, bei der die Sägekette in einem engen Kanal geführt ist. Die Sägekette tritt unterhalb des Antriebsritzels in den Kanal ein und verlässt den Kanal kurz vor Erreichen des freien Endes der Führungsschiene.

Der Erfindung liegt die Aufgabe zugrunde, ein Arbeitsgerät der gattungsgemäßen Art zu schaffen, das eine verbesserte Schnittleistung aufweist.

Diese Aufgabe wird durch ein Arbeitsgerät mit den Merkmalen des Anspruchs 1 gelöst.

Es hat sich überraschend gezeigt, dass das Zusetzen des Bereichs zwischen Kettenraddeckel und Sägekette dadurch wirkungsvoll verhindert werden kann, dass der Freiraum zwischen Kettenraddeckel und Sägekette möglichst klein ausgebildet wird. Es hat sich überraschend gezeigt, dass durch einen geringen Abstand zwischen Sägekette und Umfangswand die Schnittleistung ganz erheblich gesteigert werden kann. In Versuchen konnte beim Längsschnitt eine Erhöhung der Schnittleistung in der Größenordnung von 50% nachgewiesen werden. Es hat sich auch gezeigt, dass ein in den Kanal eingezogener Span dazu führt, dass sich sehr schnell weitere Späne anlagern und rasch ein vollständiges Zusetzen des Kanals erfolgt. Im Gegensatz zu bisherigen Lösungen ist deshalb nicht vorgesehen, einen ausreichenden Raum für Späne vorzusehen, so dass die Sägekette erst dann in Kontakt mit Spänen oder Schnittgut kommt, wenn sich sehr viel Schnittgut angelagert hat, sondern bereits das Anlagern eines ersten Spans zu verhindern. Selbst beim Längsschnitt oder beim Schneiden von langfaserigem Material kann dadurch ein Zusetzen des Kettenradraums mit Spänen vermieden werden.

Der geringe Abstand muss dabei nicht zwingend über die gesamte Strecke herrschen. Größere Abstände in einzelnen Abschnitten zwischen dem ersten Umlenkbereich und der Austrittsöffnung können akzeptabel sein. Ein Zusetzen des Kettenradraums mit Spänen kann wirkungsvoll verhindert werden, wenn der Abstand zwischen der Umfangswand des Kettenradraums und dem Dach der Sägekette bei stehender Sägekette über mindestens 50% der Strecke vom ersten Umlenkbereich zur Austrittsöffnung über die gesamte Breite der Sägekette weniger als etwa 18 mm beträgt. Bei einem Abstand von weniger als etwa 18 mm kann bei üblichen Spänen das Einziehen eines Spans, der ein Anlagern weiterer Späne und damit eine Verstopfung des Kettenradraums zur Folge hat, in ausreichendem Maße verhindert werden. Ein dennoch in den Kanal zwischen Sägekette und Kettenraddeckel eingezogener Span wird aufgrund des geringen Abstands von der Sägekette mitgenommen oder zerkleinert und aus dem Kettenradraum gefördert.

Das Dach der Sägekette ist dabei die Verbindung der der Führungsschiene abgewandten Oberkanten aller Schneidzähne in Laufrichtung, also die Umhüllende der Oberkanten aller Schneidzähne in Längsrichtung der Sägekette. Dass die Sägekette in dem Bereich zwischen den Schneidzähnen eine geringere Höhe als im Bereich der Schneidzähne aufweist, bleibt für die Ermittlung des genannten Abstands außer Betracht. Der Abstand ist dabei bei stehender Sägekette, also bei nicht angetriebener Sägekette gemessen. Bewegt sich die Sägekette, so bewirken die Fliehkräfte, dass die Sägekette von der Führungsschiene nach außen abhebt und dadurch den Abstand zwischen dem Dach der Sägekette und der Umfangswand verringert. Vorteilhaft ist der Abstand am ersten Umlenkbereich geringer als etwa 18 mm.

Vorteilhaft beträgt der Abstand über mindestens 75% der Strecke, insbesondere über die gesamte Strecke zwischen dem ersten Umlenkbereich und der Austrittsöffnung weniger als etwa 18 mm. Zweckmäßig beträgt der Abstand über mehr als 50% der genannten Strecke, insbesondere über mehr als 75% der genannten Strecke, vorzugsweise über die gesamte Strecke weniger als etwa 15 mm. Als besonders vorteilhaft wird ein Abstand von bis zu etwa 10 mm angesehen. Es hat sich gezeigt, dass die Sägekette im Bereich der Austrittsöffnung im Betrieb um etwa 5 mm nach außen bewegt wird. Bei einem Abstand von etwa 10 mm im Ruhezustand ergibt sich damit im Betrieb ein Abstand von etwa 5 mm. Ein Abstand von etwa 5 mm verhindert das Einziehen eines Spans in den Bereich zwischen dem Dach der Sägekette und der Umfangswand. Dadurch wird die Anlagerung von Spänen verhindert, und es wird gleichzeitig sichergestellt, dass die Sägekette nicht mit der Umfangswand in Kontakt kommen kann. Dadurch wird eine sehr hohe Schnittleistung erreicht.

Die Auswurföffnung mündet in Laufrichtung vorteilhaft vor dem ersten Umlenkbereich in den Kettenradraum. Am ersten Umlenkbereich beträgt der Abstand zwischen Sägekette und Umfangswand vorteilhaft weniger als etwa 10 mm, insbesondere weniger als etwa 5 mm. Als besonders vorteilhaft hat sich ein Abstand von etwa 2 mm bis 3 mm erwiesen.

Dadurch, dass der Abstand im ersten Umlenkbereich so gering gewählt wird, kann weitgehend verhindert werden, dass Späne in den zwischen Sägekette und Umfangswand gebildeten Kanal eingezogen werden.

Zwischen Sägekette und Umfangswand ist ein Kanal gebildet, wobei an der Eintrittsöffnung in den Kanal ein Führungsteil angeordnet ist, das Schnittgut zur Auswurföffnung leitet. Das Führungsteil dient als Abweiser und verhindert, dass Schnittgut oder Späne in den Kanal eintreten. Die Eintrittsöffnung in den Kanal ist dabei vorteilhaft in Laufrichtung der Sägekette vor dem ersten Umlenkbereich angeordnet. Um zu vermeiden, dass Schnittgut oder Späne von dem Führungsteil in Richtung auf den Kanal geleitet werden, ist vorgesehen, dass der Winkel, den eine Leitfläche des Führungsteils an der Eintrittsöffnung mit dem Dach der Sägekette einschließt, mehr als 90° beträgt. Der Winkel beträgt insbesondere mehr als 110°. Durch die genannte Ausrichtung der Leitfläche wird eine Trichterwirkung am Führungsteil in Richtung auf den Kanal verhindert. Vorteilhaft ist der Abstand zwischen dem Dach der Sägekette und der Umfangswand an der Eintrittsöffnung vergleichsweise klein gewählt. Der Abstand beträgt bei stehender Sägekette vorteilhaft weniger als etwa 20 mm, insbesondere weniger als etwa 15 mm. Besonders vorteilhaft beträgt der Abstand etwa 10 mm. Dadurch wird ein Einziehen von Spänen in den Kanal verhindert.

Auf der dem Gehäuse abgewandten Seite ist der Kettenradraum vorteilhaft von einer Seitenwand begrenzt. Der Abstand zwischen der Sägekette und der Seitenwand beträgt über mindestens 50% der Strecke vom ersten Umlenkbereich bis zur Austrittsöffnung bei stehender Sägekette vorteilhaft über die gesamte Höhe der Sägekette weniger als etwa 5 mm. Der Abstand ist dabei senkrecht zur Ebene der Führungsschiene gemessen. Vorteilhaft besteht der genannte Abstand über mindestens 75% der Strecke vom ersten Umlenkbereich bis zur Austrittsöffnung, insbesondere über die gesamte Strecke. Auch der seitliche Freiraum zwischen Sägekette und Kettenraddeckel wird demnach möglichst klein ausgebildet, um auch seitlich der Sägekette ein Anlagern von Spänen wirkungsvoll zu verhindern. Der geringe seitliche Abstand hat gleichzeitig zur Folge, dass der Kettenraddeckel schmaler ausgebildet werden kann, so dass sich die Gesamtbaubreite des Arbeitsgeräts verringert. Dadurch wird die Handhabung des Arbeitsgeräts erheblich erleichtert. Auch für die seitlichen Abstände wird der breiteste Bereich der Sägekette betrachtet. Unterschiedliche Breiten in unterschiedlichen Bereichen werden nicht berücksichtigt. Für die Ermittlung der Abstände wird die Sägekette als Vollkörper betrachtet, dessen Querschnittsform der Seitenansicht auf die Sägekette in Laufrichtung, also in Längsrichtung der Sägekette, entspricht.

Die Sägekette besitzt einen Kopfbereich, wobei der Abstand zwischen dem Kopfbereich und der Seitenwand über mindestens 50% der Strecke, insbesondere über die gesamte Strecke vom ersten Umlenkbereich bis zum Eintritt in die Führungsschiene vorteilhaft weniger als etwa 5 mm beträgt. Der Kopfbereich ist dabei der Bereich der Sägekette, der durch den mindestens einen Schneidzahn gebildet ist. Insbesondere beträgt der Abstand im Kopfbereich weniger als etwa 3 mm. Dadurch ist ein Anlagern von Spänen im Kopfbereich der Sägekette weitgehend vermieden. Die Sägekette besitzt vorteilhaft einen Verbindungsbereich. Der Verbindungsbereich der Sägekette ist der Bereich, in dem die einzelnen Glieder der Sägekette gelenkig miteinander verbunden sind, beispielsweise über Verbindungsbolzen. Der Abstand des Verbindungsbereichs zur Seitenwand beträgt vom ersten Umlenkbereich bis zum Eintritt in die Führungsschiene vorteilhaft weniger als etwa 6 mm. Am Eintritt in die Führungsschiene ist die Sägekette im Verbindungsbereich üblicherweise ohnehin seitlich geführt, um ein reibungsarmes Eintreten in die Führungsschiene zu gewährleisten. Es ist nun vorgesehen, auch benachbart zum Kettenrad vom ersten Umlenkbereich bis zum Eintritt in die Führungsschiene nur einen sehr geringen seitlichen Abstand zwischen Sägekette und Kettenraddeckel vorzusehen. Dadurch kann ein Anlagern von Spänen in diesem Bereich auch seitlich wirkungsvoll verhindert werden. Der Abstand des Verbindungsbereichs zur Seitenwand beträgt auf der Strecke vom ersten Umlenkbereich bis zum Eintritt in die Führungsschiene vorteilhaft weniger als etwa 4 mm.

Es ist vorgesehen, auch an der Stirnseite der Antriebswelle nur einen geringen seitlichen Abstand zur Seitenwand des Kettenradraums vorzusehen. Vorteilhaft beträgt der Abstand an der Stirnseite der Antriebswelle des Antriebsmotors weniger als etwa 5 mm, insbesondere weniger als etwa 2 mm. Dadurch wird auch in diesem Bereich das Anlagern von Schnittgut wirkungsvoll vermieden.

Eine einfache Gestaltung wird erreicht, wenn der Kettenraddeckel ein Füllstück besitzt, das den Kettenradraum mindestens teilweise begrenzt. Dadurch können auch bestehende Arbeitsgeräte durch Einsatz eines Füllstücks in einen bestehenden Kettenraddeckel mit der vorliegenden Erfindung nachgerüstet werden. Es kann jedoch auch vorgesehen sein, dass der Kettenraddeckel entsprechend schmal ausgebildet wird, um die genannten geringen Abstände zu erzielen. Dadurch kann auch die Gesamtbreite des Arbeitsgeräts deutlich verringert werden. Vorteilhaft ist am Kettenraddeckel eine Gleitleiste angeordnet, die die Sägekette am Eintritt in die Führungsschiene seitlich führt. Der Kettenradraum wird dabei vorteilhaft mindestens teilweise von der Gleitleiste begrenzt. Vorteilhaft erstreckt sich die Gleitleiste bis in den Bereich des Kettenrads, so dass die seitliche Begrenzung des Kettenradraums mindestens teilweise, insbesondere weitgehend von der Gleitleiste selbst gebildet wird. Dadurch kann durch Anordnung einer anders geformten, größeren Gleitleiste das Volumen des Kettenradraums merklich verringert werden und so das Anlagern von Spänen verhindert werden.

Ein Ausführungsbeispiel der Erfindung wird im Folgenden anhand der Zeichnung erläutert. Es zeigen:
- Fig. 1: eine schematische Seitenansicht einer Motorsäge,
- Fig. 2: eine Seitenansicht der Motorsäge im Bereich des Kettenraddeckels mit teilweise abgenommenen weiteren Gehäuseteilen,
- Fig. 3: einen Schnitt entlang der Linie III-III in Fig. 2,
- Fig. 4: einen Schnitt entlang der Linie IV-IV in Fig. 3,
- Fig. 5: eine vergrößerte Ansicht des Bereichs des Kettenrads aus der Darstellung aus Fig. 4,
- Fig. 6: einen Schnitt entlang der Linie VI-VI in Fig. 2,
- Fig. 7: den Ausschnitt VII aus Fig. 6 in vergrößerter Darstellung,
- Fig. 8: einen Schnitt entlang der Linie VIII-VIII in Fig. 2,
- Fig. 9: den Ausschnitt IX aus Fig. 8 in vergrößerter Darstellung,
- Fig. 10: einen Schnitt entlang der Linie X-X in Fig. 2,
- Fig. 11: den Ausschnitt XI aus Fig. 10 in vergrößerter Darstellung,
- Fig. 12: einen Schnitt durch ein Ausführungsbeispiel des Arbeitsgeräts entlang der Linie VI-VI in Fig. 2,
- Fig. 13: eine Seitenansicht einer Sägekette,
- Fig. 14: eine Ansicht der Sägekette aus Fig. 13 in Richtung des Pfeils XIV in Fig. 13.

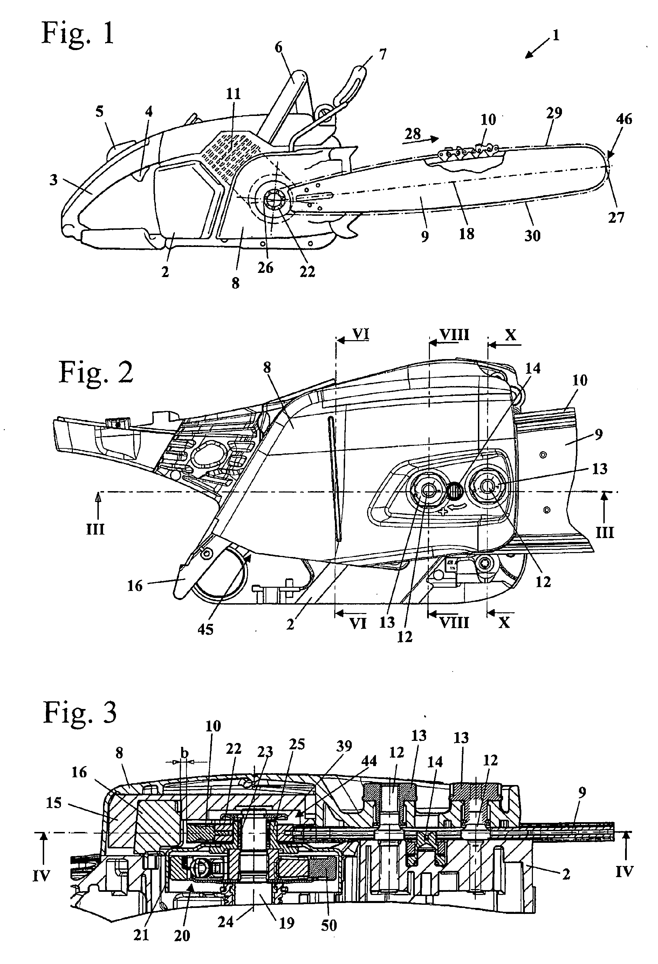

Fig. 1 zeigt als Ausführungsbeispiel für ein Arbeitsgerät eine Motorsäge 1. Die vorliegende Erfindung kann jedoch auch bei anderen Arbeitsgeräten wie beispielsweise bei Hochentastern, Baumerntemaschinen oder dgl. eingesetzt werden.

Die Motorsäge 1 besitzt ein Gehäuse 2, an dem ein hinterer Handgriff 3 und ein Griffbügel 6 festgelegt sind. Im Gehäuse 2 ist ein Antriebsmotor 11 angeordnet. Als Gehäuse 2 werden alle Gehäuseteile der Motorsäge 1 bezeichnet, die die Außenkontur definieren. Vorteilhaft ist dabei der Teil des Gehäuses 2, an dem der Antriebsmotor 11 festgelegt ist, von dem Teil, an dem der hintere Handgriff 3 und der Griffbügel 6 festgelegt sind, schwingungsentkoppelt. Am hinteren Handgriff 3 sind ein Gashebel 4 sowie eine Gashebelsperre 5 schwenkbar gelagert. Am Gehäuse 2 ist eine Führungsschiene 9 festgelegt, an der eine Sägekette 10 umlaufend angeordnet ist. Die Sägekette 10 wird vom Antriebsmotor 11 in einer Laufrichtung 28 angetrieben. Die Führungsschiene 9 besitzt eine Längsmittelachse 18, die die Sägekette 10 benachbart zu einem Kettenrad 22 in einem ersten Umlenkbereich 26 schneidet und benachbart zur dem Gehäuse 2 abgewandten Spitze 46 der Führungsscheine 9 in einem zweiten Umlenkbereich 27. Die Umlenkbereiche 26, 27 sind Schnitte durch die Sägekette 10 in einer Schnittebene, die die Längsmittelachse 18 enthält und senkrecht zur Ebene der Führungsschiene 9 steht. In einem ersten Abschnitt 29 bewegt sich die Sägekette 10 im Betrieb vom ersten Umlenkbereich 26 zum zweiten Umlenkbereich 27. Dabei entfernt sich die Sägekette 10 vom Gehäuse 2. In einem zweiten Abschnitt 30 bewegt sich die Sägekette 10 vom zweiten Umlenkbereich 27 zum ersten Umlenkbereich 26. In diesem Bereich läuft die Sägekette 10 auf das Gehäuse 2 und den hinteren Handgriff 3 der Motorsäge 1 zu. Am Gehäuse 2 der Motorsäge 1 ist ein Kettenraddeckel 8 angeordnet, der den Bereich des Kettenrads 22 abdeckt. An der der Führungsschiene 9 zugewandten Seite des Griffbügels 6 ist ein Handschutz 7 angeordnet, der vorteilhaft zum Auslösen einer Kettenbremse dient.

Fig. 2 zeigt den Bereich des Kettenraddeckels 8 im Einzelnen. Der Kettenraddeckel 8 ist mit zwei Befestigungsmuttern 13 am Gehäuse 2 festgelegt. Die Befestigungsmuttern 13 sind auf Befestigungsbolzen 12 aufgeschraubt, die im Gehäuse 2 gehalten sind und die die Führungsschiene 9 durchragen. Die Führungsschiene 9 ist zwischen dem Gehäuse 2 und dem Kettenraddeckel 8 geklemmt gehalten. Im Bereich zwischen den Befestigungsbolzen 12 ragt eine Stellschraube 14 durch den Kettenraddeckel 8, die zur Einstellung der der Sägekette 10 zugeführten Ölmenge dient. An der der Führungsscheine 9 abgewandten und bei der in Fig. 1 gezeigten üblichen Abstellposition der Motorsäge 1 nach unten gewandten Seite ist am Kettenraddeckel 8 eine Auswurföffnung 45 für Schnittgut ausgebildet. An der dem hinteren Handgriff 3 zugewandten Seite der Auswurföffnung 45 ist ein Führungsteil 16 angeordnet, das Schnittgut wie Späne oder dgl. nach hinten und unten in Richtung auf den Boden leitet. Das Führungsteil 16 kann aus elastischem Material wie beispielsweise Gummi bestehen.

In den Figuren 2 bis 12 ist die Sägekette 10 als massives Bauteil mit über die gesamte Länge der Sägekette 10 konstantem Querschnitt gezeigt. Das schematisch gezeigte massive Bauteil kennzeichnet den Raum, den die Sägekette 10 bei einer Bewegung in Laufrichtung 28 einnimmt. Fliehkräfte, die auf die Sägekette 10 wirken und die Sägekette nach außen bewegen, sind dabei nicht berücksichtigt. Die schematische Darstellung der Sägekette 10 kennzeichnet die maximale Erstreckung der Sägekette 10 im jeweiligen Bereich beim Umlauf um die Führungsschiene 9. Der Raum, den die Sägekette 10 bei langsamem Umlauf um die Führungsschiene 9 einnimmt, ist maßgeblich zur Ermittlung aller Abstände der Sägekette 10 zu benachbarten Bauteilen und Wänden.

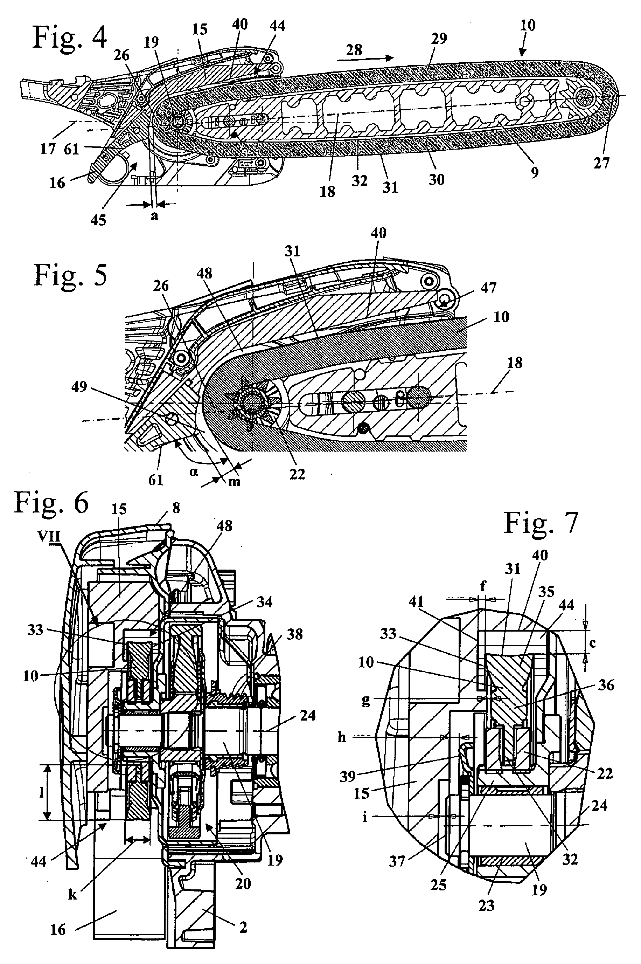

Fig. 3 zeigt einen Schnitt durch das Gehäuse 2 und den Kettenraddeckel 8 in einer Schnittebene 17 (Fig. 4), die zur Längsmittelachse 18 der Führungsschiene 9 geringfügig geneigt ist. Wie Fig. 3 zeigt, ist im Kettenraddeckel 8 ein Füllstück 15 angeordnet, das das freie Volumen des Kettenraddeckels 8 stark verringert. Die Sägekette 10 ist in einem Kettenradraum 44 angeordnet, der vom Kettenraddeckel 8, dem Füllstück 15 und dem Führungsteil 16 begrenzt wird. Der Kettenradraum 44 ist möglichst klein ausgebildet, so dass zwischen der Sägekette 10 und dem Füllstück 15 bzw. dem Führungsteil 16 nur wenig Platz bleibt. Dadurch wird verhindert, dass sich Späne zwischen der Sägekette 10 und dem Kettenraddeckel 8 anlagern und die Schnittleistung der Motorsäge 1 herabsenken.

Wie Fig. 3 zeigt, besteht in der gezeigten Schnittebene zwischen der Sägekette 10 und dem Führungsteil 16 ein Abstand b. Der Abstand b ist deutlich kleiner als etwa 10 mm. Der Abstand b ist vorteilhaft kleiner als 5 mm. Im gezeigten Ausführungsbeispiel beträgt der Abstand b etwa 2 mm bis etwa 3 mm.

Fig. 3 zeigt auch den Antrieb der Sägekette 10. Der Antriebsmotor 11, der im Ausführungsbeispiel als Verbrennungsmotor, insbesondere als Einzylinder-Zweitaktmotor ausgebildet ist, besitzt eine Antriebswelle 19, nämlich eine Kurbelwelle. Die Antriebwelle 19 ist um eine Drehachse 24 drehbar gelagert. Mit der Antriebswelle 19 ist eine Fliehkraftkupplung 20 drehfest verbunden. Die Fliehkraftkupplung 20 besitzt Fliehgewichte 50, die sich bei Erreichen einer konstruktiv vorgegebenen Drehzahl radial nach außen bewegen und in ihrer nach außen gerückten Stellung reibschlüssig mit einer Kupplungstrommel 21 verbunden sind. Die Kupplungstrommel 21 trägt an ihrer dem Antriebsmotor 11 abgewandten Seite ein Ritzel 25. Im Bereich des Ritzels 25 ist die Kupplungstrommel 21 mit einem Lager 23 drehbar auf der Antriebswelle 19 gelagert. Am Ritzel 25 ist das Kettenrad 22 drehfest gehalten. Es kann auch vorgesehen sein, dass ein als Ritzel ausgebildetes Kettenrad 22 unmittelbar drehfest mit der Kupplungstrommel 21 verbunden ist. Am Kettenrad 22 ist die Sägekette 10 geführt. Wie Fig. 3 auch zeigt, sind das Ritzel 25 und das Kettenrad 22 stirnseitig von einer Abdeckscheibe 39 abgedeckt, die das Kettenrad 22 und das Ritzel 25 in axialer Richtung an der Antriebswelle 19 sichert.

In Fig. 4 ist der Kettenradraum 44 im Längsschnitt gezeigt. Auch in Fig. 4 ist die Sägekette 10 als Vollkörper gezeigt, der den Bereich umschließt, durch den sich die Sägekette 10 bewegt. Der erste Abschnitt 29 entspricht dem oberen Trumm der Sägekette 10 und der zweite Abschnitt 30 dem unteren Trumm. Die Sägekette 10 besitzt ein Dach 31, das die von der Führungsschiene 9 abgewandte, nach außen weisende Seite kennzeichnet. An der gegenüberliegenden, der Führungsschiene 9 zugewandten und in die Führungsschiene 9 eingreifenden Seite besitzt die Sägekette 10 einen Fuß 32.

Der Kettenradraum 44 wird von einer Umfangswand 40 begrenzt, die gegenüberliegend zum Dach 31 der Sägekette 10 angeordnet ist. Die Umfangswand 40 wird im Ausführungsbeispiel vom Füllstück 15 und, benachbart zum ersten Umlenkbereich 26, vom Führungsteil 16 gebildet. Die Umfangswand 40 besitzt zum Dach 31 der Sägekette 10 am ersten Umlenkbereich 26 einen Abstand a, der weniger als etwa 18 mm beträgt. Der Abstand a beträgt im gezeigten Ruhezustand der Sägekette 10 vorteilhaft weniger als etwa 15 mm, insbesondere weniger als etwa 10 mm. Im Ausführungsbeispiel beträgt der Abstand a weniger als etwa 5 mm. Wie Fig. 4 zeigt, ist der Abstand zwischen Sägekette 10 und Umfangswand 40 im Bereich der Schnittebene 17 am kleinsten. Die Schnittebene 17 entspricht der Schnittebene in Fig. 3. In der Schnittebene 17 besteht der Abstand b zwischen Umfangswand 40 und Sägekette 10. In Laufrichtung 28 vergrößert sich der Abstand bis zu der in Fig. 5 gezeigten Austrittsöffnung 47, an der die Sägekette 10 den Kettenradraum 44 verlässt. Der Abstand zwischen Sägekette 10 und Umfangswand 40 ist über mindestens 50% der Strecke vom ersten Umlenkbereich 26 zur Austrittsöffnung 47 kleiner als etwa 18 mm. Im Ausführungsbeispiel ist der Abstand über die gesamte Strecke vom ersten Umlenkbereich 26 zur Austrittsöffnung 47 kleiner als 10 mm. Vorteilhaft ist der Abstand über mindestens 75% der Strecke, insbesondere über die gesamte Strecke kleiner als etwa 18 mm, insbesondere kleiner als etwa 15 mm. Im Betrieb bewegt sich die Sägekette 10 aufgrund der Fliehkräfte von der Führungsschiene 9 nach außen, wobei die Bewegung nach außen umso größer ist, je weiter die Sägekette 10 von den Umlenkbereichen 26 und 27 entfernt ist. Die Umfangswand 40 folgt etwa dem Verlauf der Sägekette 10 im Betrieb. Im Betrieb ist der Abstand zwischen Sägekette 10 und der Umfangswand 40 im Bereich der Austrittsöffnung 47 um etwa 5 mm kleiner als im Ruhezustand. Vorteilhaft beträgt der Abstand zwischen dem Dach 31 der Sägekette 10 und der Umfangswand 40 im Betrieb vom ersten Umlenkbereich 26 bis zur Austrittsöffnung 47 etwa 5 mm.

Wie Fig. 5 zeigt, ist zwischen der Sägekette 10 und der Umfangswand 40 ein Kanal 48 gebildet, der vorteilhaft möglichst klein ausgebildet ist, so dass nur ein geringer Abstand zwischen Sägekette 10 und Umfangswand 40 verbleibt. Am zweiten Abschnitt 30, also in Laufrichtung 28 vor dem ersten Umlenkbereich 26, ist eine Eintrittsöffnung 49 in den Kanal 48 gebildet. An der Eintrittsöffnung 49 besteht zwischen der Sägekette 10 und der Umfangswand 40 ein Abstand m, der vorteilhaft ebenfalls kleiner als 20 mm ist, insbesondere kleiner als etwa 15 mm. Im Ausführungsbeispiel beträgt der Abstand m näherungsweise 10 mm. Vorteilhaft beträgt der Abstand zwischen dem Dach 31 der Sägekette 10 und der Umfangswand 40 von der Eintrittsöffnung 49 bis zur Austrittsöffnung 47 weniger als etwa 18 mm, insbesondere weniger als etwa 15 mm, vorzugsweise etwa 10 mm oder weniger.

Wie Fig. 4 zeigt, besitzt das Führungsteil 16 eine Leitfläche 61, die eine Auswurföffnung 45 begrenzt. Die Leitfläche 61 ist bezogen auf die in Fig. 1 gezeigte übliche Abstellposition der Motorsäge 1 nach hinten und unten gerichtet und leitet Späne in Richtung zum Boden. Wie Fig. 5 zeigt, schließt die Leitfläche 61 benachbart zur Eintrittsöffnung 49 mit dem Dach 31 der Sägekette 10, also einer Geraden, die im Bereich der Eintrittsöffnung 49 tangential zum Dach 31 der Sägekette liegt, einen Winkel α ein, der mehr als 90° beträgt. Vorteilhaft beträgt der Winkel α mehr als 110°. Dadurch wird erreicht, dass die Leitfläche 61 mit dem Dach 31 der Sägekette 10 keinen Trichter bildet, der Späne in den Kanal 48 leitet, sondern dass die Leitfläche 61 benachbart zur Eintrittsöffnung 49 als Abweiser wirkt, die Späne in Richtung auf die Auswurföffnung 45 leitet.

Fig. 6 zeigt einen Schnitt durch die Antriebswelle 19 und den Kettenraddeckel 8 senkrecht zu der in Fig. 4 eingezeichneten Schnittebene 17. Wie Fig. 6 zeigt, ist benachbart zur Fliehkraftkupplung 20 auf der der Sägekette 10 abgewandten Seite der Fliehkraftkupplung 20 ein Schneckenrad 38 drehfest mit der Antriebswelle 19 verbunden. Das Schneckenrad 38 dient zum Antrieb einer Schmierölpumpe, die Schmieröl für die Sägekette fördert. Wie Fig. 6 zeigt, besitzt die Sägekette 10 eine parallel zur Drehachse 24 gemessene Breite k und eine senkrecht zur Drehachse 24, in der Ebene der Führungsschiene 9 (Fig. 1) gemessene Höhe 1. Die zu den Figuren 3 bis 5 angegebenen Abstände zwischen Sägekette 10 und Umfangswand 40 bestehen vorteilhaft mindestens über die gesamte Breite k der Sägekette 10. Wie Fig. 6 zeigt, ist die Umfangswand 40 eben ausgebildet und erstreckt sich seitlich geringfügig über die Sägekette 10. Die Umfangswand 40 verläuft parallel zur Drehachse 24. Wie Fig. 6 auch zeigt, besitzt die Sägekette 10 eine dem Gehäuse 2 zugewandte Innenseite 34 sowie eine dem Gehäuse 2 abgewandte, dem Kettenraddeckel 8 zugewandte Außenseite 33.

Wie Fig. 7 zeigt, besitzt die Sägekette 10 auch an ihrer Außenseite 33 einen nur geringen Abstand zum Füllstück 15. Wie Fig. 7 zeigt, ist der Kettenradraum 44 auf der dem Gehäuse 2 abgewandten Seite von einer Seitenwand 41 begrenzt. Die Sägekette 10 besitzt einen Kopfbereich 35 und einen Verbindungsbereich 36. Am Kopfbereich 35 ist das Dach 31 ausgebildet. Der Kopfbereich 35 wird von den Schneidzähnen der Sägekette 10 gebildet, wie im Folgenden noch näher beschrieben wird. Am Kopfbereich 35 besitzt die Außenseite 33 der Sägekette 10 zur Seitenwand 41 einen Abstand f, der vorteilhaft weniger als 5 mm beträgt. Insbesondere beträgt der Abstand f weniger als 3 mm. Im Ausführungsbeispiel beträgt der Abstand f etwa 1 mm bis 1,5 mm. Wie Fig. 7 auch zeigt, besitzt der Verbindungsbereich 36 zur Seitenwand 41 einen Abstand g, der weniger als 6 mm beträgt. Insbesondere beträgt der Abstand g weniger als 4 mm. Im Ausführungsbeispiel beträgt der Abstand g zwischen 0,5 mm und 1 mm. Der Abstand zwischen der Sägekette 10 und der Seitenwand 41 beträgt vorteilhaft über die gesamte Höhe 1 der Sägekette 10 weniger als etwa 6 mm, insbesondere weniger als etwa 3 mm. Dadurch wird das Anlagern von Spänen an der Außenseite 33 der Sägekette 10 vermieden.

Wie Fig. 7 auch zeigt, ist auch im Bereich des Kettenrads 22 und der Antriebswelle 19 nur ein geringer Zwischenraum zwischen der Antriebseinheit und dem Füllstück 15 gebildet. Die Abdeckscheibe 39 besitzt einen parallel zur Drehachse 24 gemessenen Abstand h zur Seitenwand 41, der vorteilhaft ebenfalls weniger als 5 mm beträgt. Im Ausführungsbeispiel beträgt der Abstand h zwischen etwa 1 mm und etwa 2 mm. Die Antriebswelle 19 besitzt eine der Seitenwand 41 zugewandte Stirnseite 37, die zur Seitenwand 41 einen Abstand i besitzt. Auch der Abstand i beträgt weniger als 5 mm. Im Ausführungsbeispiel beträgt der Abstand i etwa 1 mm bis etwa 1,5 mm. Alle Abstände f, g, h, i sind parallel zur Drehachse 24 und senkrecht zur Ebene der Führungsschiene 9 gemessen. Wie Fig. 7 zeigt, ist die Seitenwand 41 gestuft ausgebildet und folgt dem Verlauf der Antriebswelle 19, des Kettenrads 22 und der Sägekette 10. Dadurch kann ein sehr geringes freies Volumen zwischen der Antriebseinheit der Sägekette 10, der Sägekette 10 selbst und dem Kettenraddeckel 8 erreicht werden.

Fig. 7 zeigt auch das Lager 23 und das Ritzel 25 im Einzelnen. Wie Fig. 7 auch zeigt, ragt der Fuß 32 der Sägekette 10 in das Kettenrad 22. Das Dach 31 der Sägekette 10 besitzt zur Umfangswand 40 in der in Fig. 7 gezeigten Schnittebene einen Abstand c, der deutlich geringer als etwa 20 mm ist. Im Ausführungsbeispiel ist der Abstand c kleiner als etwa 5 mm und beträgt vorteilhaft etwa 3 mm bis 4 mm. Die in Fig. 7 gezeigten Abstände f und g zur Seitenwand 41 bestehen vorteilhaft mindestens vom ersten Umlenkbereich 26 bis zum Eintritt der Sägekette 10 in die Führungsschiene 9.

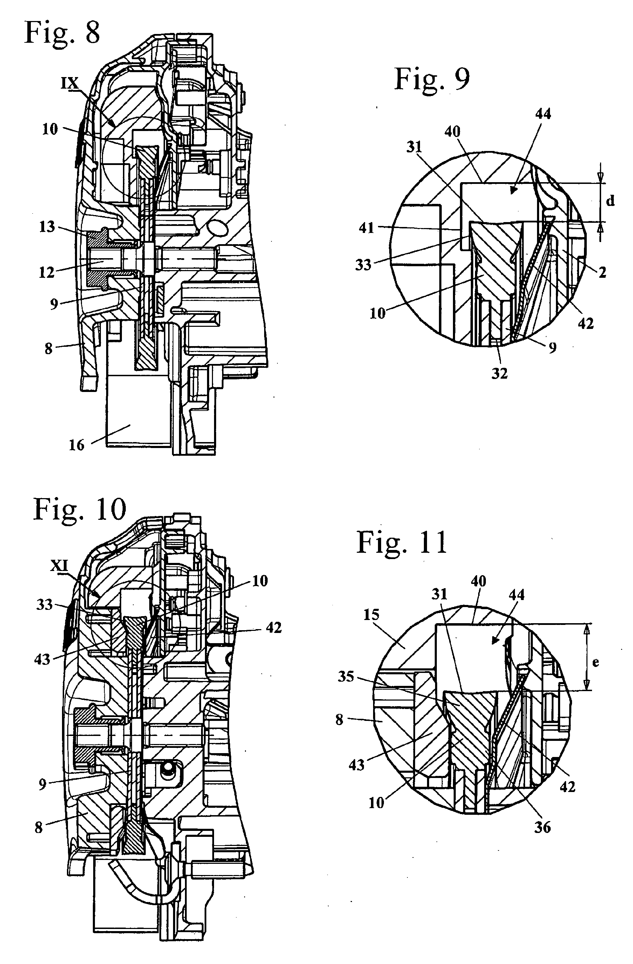

Fig. 8 zeigt die Sägekette 10 im Bereich des Eintritts in die Führungsschiene 9. Wie Fig. 9 zeigt, besitzt das Dach 31 einen Abstand d zur Umfangswand 40, der deutlich keiner als 18 mm ist. Im Ausführungsbeispiel beträgt der Abstand d etwa 5 mm bis etwa 6 mm. Die Abstände zwischen der Außenseite 33 der Sägekette 10 und der Seitenwand 41 entsprechen den in Fig. 7 gezeigten Abständen. Wie Fig. 9 auch zeigt, ist benachbart zum Eintritt der Sägekette 10 in die Führungsschiene 9 ein Seitenblech 42 am Gehäuse 2 angeordnet, das die Sägekette 10 führt.

Wie Fig. 10 zeigt, ist am Kettenraddeckel 8 eine Gleitleiste 43 angeordnet, die die Sägekette 10 an ihrer Außenseite 33 führt. Die Gleitleiste 43 erstreckt sich im Bereich des der Spitze 46 der Führungsschiene 9 (Fig. 1) zugewandten Befestigungsbolzens 12. Wie Fig. 11 zeigt, liegt die Sägekette 10 mit ihrem Verbindungsbereich 36 an der Gleitleiste 43 an. Im Kopfbereich 35 besitzt die Gleitleiste 43 ebenso wie das Seitenblech 42 einen geringen seitlichen Abstand zur Sägekette 10. Das Dach 31 der Sägekette 10 besitzt zur Umfangswand 40 einen Abstand e, der ebenfalls deutlich kleiner als 18 mm ist. Der Abstand e beträgt vorteilhaft weniger als etwa 15 mm, insbesondere etwa 10 mm.

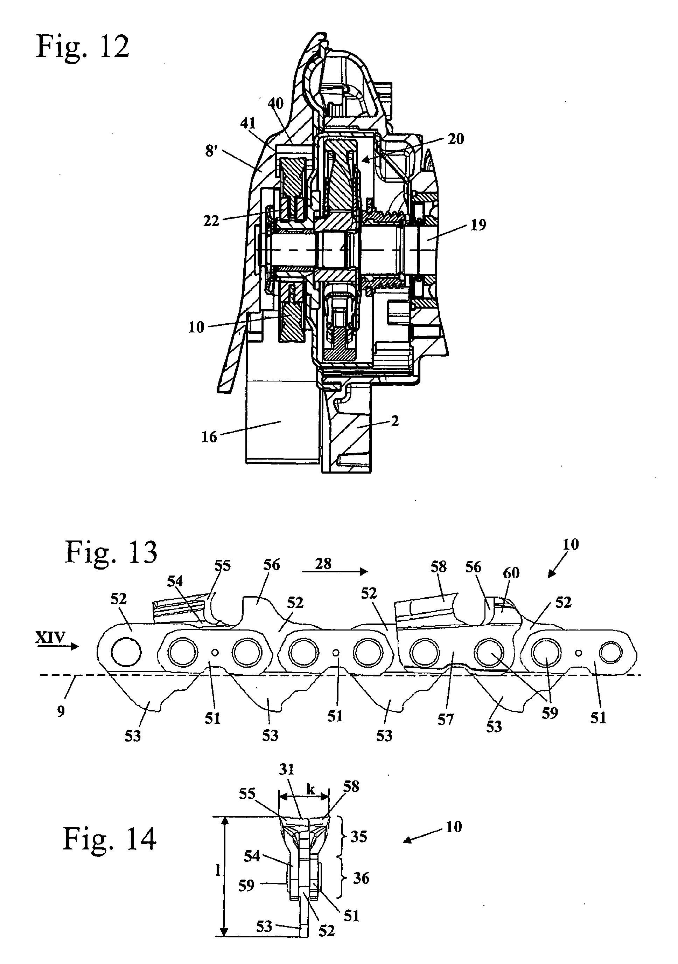

Fig. 12 zeigt ein Ausführungsbeispiel eines Kettenraddeckels 8'. Gleiche Bezugszeichen wie in den vorangegangenen Figuren kennzeichnen einander entsprechende Bauteile. Der Aufbau des Antriebs, des Kettenrads 22 und der Sägekette 10 sind identisch wie in den vorangegangenen Figuren. Auch die Abstände zur Umfangswand 40 und der Seitenwand 41 des Kettenraddeckels 8' sind gleich. Im Ausführungsbeispiel nach Fig. 12 besitzt der Kettenraddeckel 8' kein Füllstück 15, sondern der Kettenraddeckel 8' ist schmal ausgebildet und bildet die Umfangswand 40 und die Stirnwand 41. Dadurch kann die gesamte Baubreite der Motorsäge 1 deutlich verringert werden. Alternativ kann der verkleinerte Innenraum des Kettenraddeckels 8 auch durch Ausschäumen des Kettenraddeckels 8, durch Anordnen einer Zwischenwand oder durch Vergrößerung der Gleitleiste 43 derart, dass die Gleitleiste 43 das Volumen unter dem Kettenraddeckel 8 teilsweise ausfüllt, ausgebildet werden.

Die Figuren 13 und 14 zeigen ein Ausführungsbeispiel für eine Sägekette 10. Die Sägekette 10 besitzt Verbindungsglieder 51, die mit Treibgliedern 52 über Verbindungsbolzen 59 gelenkig verbunden sind. Die Treiblieder 52 besitzen Treibansätze 53, die in die Führungsschiene 9 ragen und die vom Kettenrad 22 angetrieben werden. Die Verbindungsglieder 51 sind teilweise als Schneidglieder ausgebildet. In Fig. 13 ist ein linkes Schneidglied 54 gezeigt, das einen linken Schneidzahn 55 besitzt. Vorlaufend zu dem Schneidzahn 55 ist an dem vorlaufenden Treibglied 52 ein Tiefenbegrenzer 56 angeordnet. Auch das Schneidglied 54 besitzt einen in Fig. 13 vom Tiefenbegrenzer 56 verdeckten Tiefenbegrenzer. Die Sägekette 10 besitzt außerdem rechte Schneidglieder 57 mit einem rechten Schneidzahn 58. Vorlaufend zum Schneidzahn 58 ist ein Tiefenbegrenzer 60 am Schneidglied 57 ausgebildet. Benachbart zum Tiefenbegrenzer 60 ist ein Tiefenbegrenzer 56 des Treibgliedes 52 angeordnet. Auch eine andere Gestaltung der Sägekette 10 kann vorgesehen sein.

Wie Fig. 14 zeigt, bilden die dem Fuß 32 abgewandten Oberseiten der Schneidzähne 55 und 58 das Dach 31 der Sägekette 10. Der Kopfbereich 35 wird durch die Schneidzähne 55 und 58 gebildet. Der Verbindungsbereich 36 ist der Bereich, in dem die Verbindungsglieder 51 mit den Treibgliedern 52 über die Verbindungsbolzen 59 verbunden sind. Der in den Figuren 3 bis 12 gezeigte Vollkörper, der die Sägekette 10 schematisch darstellt, ergibt sich aus der Umfangslinie der Sägekette 10 in der Ansicht in Laufrichtung 28, die in Fig. 14 gezeigt ist.

## Patentansprüche

1. Arbeitsgerät mit einem Gehäuse (2), an dem eine Führungsschiene (9) festgelegt ist, wobei das Arbeitsgerät einen Antriebsmotor (11) besitzt, der zum Antrieb einer an der Führungsschiene (9) geführten Sägekette (10) in einer Laufrichtung (28) dient, wobei die Sägekette (10) mindestens einen Schneidzahn (55, 58) besitzt, der ein Dach (31) der Sägekette (10) bildet, wobei der Antriebsmotor (11) die Sägekette (10) über ein Kettenrad (22) antreibt, das in einem Kettenradraum (44) angeordnet ist, wobei der Kettenradraum (44) von einem Kettenraddeckel (8) abgedeckt ist und wobei der Kettenradraum (44) eine Umfangswand (40) besitzt, die den Kettenradraum (44) benachbart zu dem Dach (31) der Sägekette (10) begrenzt, wobei der Kettenradraum (44) eine Auswurföffnung (45) für Schnittgut besitzt, die am Dach (31) der Sägekette (10) mündet, wobei die Führungsschiene (9) eine Längsmittelachse (18) besitzt, die die Sägekette (10) benachbart zum Kettenrad (22) in einem ersten Umlenkbereich (26) und benachbart zu einer Spitze (46) der Führungsschiene (9) in einem zweiten Umlenkbereich (27) schneidet, wobei die Sägekette (10) in einem ersten Abschnitt (29) in Laufrichtung (28) vom ersten Umlenkbereich (26) zum zweiten Umlenkbereich (27) angetrieben ist und in einem zweiten Abschnitt (30) vom zweiten Umlenkbereich (27) zum ersten Umlenkbereich (26), und wobei die Sägekette (10) den Kettenradraum (44) an einer Austrittsöffnung (47) verlässt, die am ersten Abschnitt (29) angeordnet ist, wobei die Auswurföffnung (45) in Laufrichtung (28) vor dem ersten Umlenkbereich (26) in den Kettenradraum (44) mündet,
wobei der Abstand (b, c, d, e) zwischen der Umfangswand (40) des Kettenradraums (44) und dem Dach (31) der Sägekette (10) bei stehender Sägekette (10) über mindestens 50% der Strecke vom ersten Umlenkbereich (26) zur Austrittsöffnung (47) über die gesamte Breite (k) der Sägekette (10) weniger als etwa 18 mm beträgt, wobei zwischen der Sägekette (10) und der Umfangswand (40) ein Kanal (48) verläuft,
**dadurch gekennzeichnet, dass** an der Eintrittsöffnung (49) in den Kanal (48) ein Führungsteil (16) angeordnet ist, das Schnittgut zur Auswurföffnung (45) leitet, wobei das Führungsteil (16) eine Leitfläche (61) besitzt, die die Auswurföffnung (45) begrenzt, wobei die Leitfläche (61) bezogen auf die übliche Abstellposition des Arbeitsgeräts nach hinten und unten gerichtet ist und Späne in Richtung zum Böden leitet.

2. Arbeitsgerät nach Anspruch 1,
**dadurch gekennzeichnet, dass** der Abstand (b, c, d, e) über mindestens 75% der Strecke vom ersten Umlenkbereich (26) zur Austrittsöffnung (47) weniger als etwa 18 mm beträgt.

3. Arbeitsgerät nach Anspruch 1 oder 2,
**dadurch gekennzeichnet, dass** der Abstand (b, c, d, e) über mehr als 50% der Strecke vom ersten Umlenkbereich (26) zur Austrittsöffnung (47) weniger als etwa 15 mm beträgt.

4. Arbeitsgerät nach einem der Ansprüche 1 bis 43,
**dadurch gekennzeichnet, dass** der Abstand (a) zwischen dem Dach (31) der Sägekette (10) und der Umfangswand (40) am ersten Umlenkbereich (26) bei stehender Sägekette (10) weniger als etwa 10 mm, insbesondere weniger als etwa 5 mm beträgt.

5. Arbeitsgerät nach einem der Ansprüche 1 bis 4,
**dadurch gekennzeichnet, dass** die Eintrittsöffnung (49) in den Kanal (48) in Laufrichtung (28) der Sägekette (10) vor dem ersten Umlenkbereich (26) angeordnet ist.

6. Arbeitsgerät nach einem der Ansprüche 1 bis 5,
**dadurch gekennzeichnet, dass** der Winkel (α), den die Leitfläche (61) des Führungsteils (16) an der Eintrittsöffnung (49) mit dem Dach (31) der Sägekette (10) einschließt, mehr als 90° beträgt.

7. Arbeitsgerät nach Anspruch 6,
**dadurch gekennzeichnet, dass** der Winkel (α), den die Leitfläche (61) des Führungsteils (16) an der Eintrittsöffnung (49) mit dem Dach (31) der Sägekette (10) einschließt, mehr als 110° beträgt.

8. Arbeitsgerät nach einem der Ansprüche 1 bis 7,
**dadurch gekennzeichnet, dass** der Abstand (m) zwischen dem Dach (31) der Sägekette (10) und der Umfangswand (40) an der Eintrittsöffnung (49) bei stehender Sägekette (10) weniger als etwa 20 mm beträgt.

9. Arbeitsgerät nach einem der Ansprüche 1 bis 98,
**dadurch gekennzeichnet, dass** der Kettenradraum (44) auf der dem Gehäuse (2) abgewandten Seite von einer Seitenwand (41) begrenzt ist.

10. Arbeitsgerät nach Anspruch 9,
**dadurch gekennzeichnet, dass** der Abstand (f, g) zwischen der Sägekette (10) und der Seitenwand (41) über mindestens 50% der Strecke vom ersten Umlenkbereich (26) bis zur Austrittsöffnung (47) bei stehender Sägekette (10) über die gesamte Höhe (1) der Sägekette (10) weniger als etwa 5 mm beträgt.

11. Arbeitsgerät nach Anspruch 9 oder 10,
**dadurch gekennzeichnet, dass** die Sägekette (10) einen Kopfbereich (35) besitzt, der durch den mindestens einen Schneidzahn (55, 58) gebildet ist, wobei der Abstand (f) zwischen dem Kopfbereich (35) und der Seitenwand (41) vom ersten Umlenkbereich (26) bis zum Eintritt in die Führungsschiene (9) weniger als etwa 5 mm beträgt.

12. Arbeitsgerät nach einem der Ansprüche 9 bis 11,
**dadurch gekennzeichnet, dass** die Sägekette (10) einen Verbindungsbereich (36) besitzt, in dem die Glieder der Sägekette (10) gelenkig miteinander verbunden sind, wobei der Abstand (g) des Verbindungsbereichs (36) zur Seitenwand (41) vom ersten Umlenkbereich (26) bis zum Eintritt in die Führungsschiene (9) weniger als etwa 6 mm beträgt.

13. Arbeitsgerät nach einem der Ansprüche 9 bis 12,
**dadurch gekennzeichnet, dass** der Abstand (i) einer Stirnseite (37) der Antriebswelle (19) des Antriebsmotors (11) zur Seitenwand (41) weniger als etwa 5 mm beträgt.

14. Arbeitsgerät nach einem der Ansprüche 1 bis 13,
**dadurch gekennzeichnet, dass** am Kettenraddeckel (8) ein Füllstück (15) angeordnet ist, das den Kettenradraum (44) mindestens teilweise begrenzt.

15. Arbeitsgerät nach einem der Ansprüche 1 bis 14,
**dadurch gekennzeichnet, dass** am Kettenraddeckel (8) eine Gleitleiste (43) angeordnet ist, die die Sägekette (10) am Eintritt in die Führungsschiene (9) seitlich führt, wobei der Kettenradraum (44) mindestens teilweise von der Gleitleiste (43) begrenzt ist.

## Claims

1. Power tool with a housing (2), on which a guide track (9) is fixed, wherein the power tool has a drive motor (11) which serves to drive a saw chain (10), guided on the guide track (9), in a running direction (28), wherein the saw chain (10) has at least one cutting tooth (55, 58) which forms a roof (31) of the saw chain (10), wherein the drive motor (11) drives the saw chain (10) via a chain wheel (22) which is arranged in a chain wheel space (44), wherein the chain wheel space (44) is covered by a chain wheel cover (8) and wherein the chain wheel space (44) has a peripheral wall (40) which defines the chain wheel space (44) adjacently to the roof (31) of the saw chain (10), wherein the chain wheel space (44) has an ejection opening (45) for material that has been cut which opens out on the roof (31) of the saw chain (10), wherein the guide track (9) has a longitudinal middle axis (18) which intersects the saw chain (10) adjacently to the chain wheel (22) in a first deflection area (26) and adjacently to a tip (46) of the guide track (9) in a second deflection area (27), wherein the saw chain (10) is driven in a first portion (29) in the running direction (28) from the first deflection area (26) to the second deflection area (27) and in a second portion (30) from the second deflection area (27) to the first deflection area (26), and wherein the saw chain (10) leaves the chain wheel space (44) at an outlet opening (47) which is arranged on the first portion (29), wherein the ejection opening (45) opens in the running direction (28) before the first deflection area (26) into the chain wheel space (44),
wherein the distance (b, c, d, e) between the peripheral wall (40) of the chain wheel space (44) and the roof (31) of the saw chain (10), when the saw chain (10) is upright, over at least 50% of the stretch from the first deflection area (26) to the outlet opening (47) over the whole width (k) of the saw chain (10) is less than approximately 18 mm, wherein a channel (48) extends between the saw chain (10) and the peripheral wall (40),
**characterised in that** a guide part (16) is arranged at the inlet opening (49) into the channel (48) and conveys material that has been cut to the ejection opening (45), wherein the guide part (16) has a guide surface (61) which defines the ejection opening (45), wherein the guide surface (61) is orientated rearwards and downwards with respect to the usual placing position of the power tool and conveys chippings towards the ground.

2. Power tool according to claim 1,
**characterised in that** the distance (b, c, d, e) over at least 75% of the stretch from the first deflection area (26) to the outlet opening (47) is less than approximately 18 mm.

3. Power tool according to claim 1 or 2,
**characterised in that** the distance (b, c, d, e) over more than 50% of the stretch from the first deflection area (26) to the outlet opening (47) is less than approximately 15 mm.

4. Power tool according to one of claims 1 to 3,
**characterised in that** the distance (a) between the roof (31) of the saw chain (10) and the peripheral wall (40) on the first deflection area (26), when the saw chain (10) is upright, is less than approximately 10 mm, in particular less than approximately 5 mm.

5. Power tool according to one of claims 1 to 4,
**characterised in that** the inlet opening (49) into the channel (48) is arranged, in the running direction (28) of the saw chain (10), before the first deflection area (26).

6. Power tool according to one of claims 1 to 5,
**characterised in that** the angle (α) of the guide surface (61) of the guide part (16) at the inlet opening (49) with respect to the roof (31) of the saw chain (10) is more than 90°.

7. Power tool according to claim 6,
**characterised in that** the angle (α) of the guide surface (61) of the guide part (16) at the inlet opening (49) with respect to the roof (31) of the saw chain (10) is more than 110°.

8. Power tool according to one of claims 1 to 7,
**characterised in that** the distance (m) between the roof (31) of the saw chain (10) and the peripheral wall (40) at the inlet opening (49) is less than approximately 20 mm when the saw chain (10) is upright.

9. Power tool according to one of claims 1 to 8,
**characterised in that** the chain wheel space (44) is defined on the side facing away from the housing (2) by a side wall (41).

10. Power tool according to claim 9,
**characterised in that** the distance (f, g) between the saw chain (10) and the side wall (41) over at least 50% of the stretch from the first deflection area (26) to the outlet opening (47), when the saw chain (10) is upright, over the entire height (1) of the saw chain (10), is less than approximately 5 mm.

11. Power tool according to claim 9 or 10,
**characterised in that** the saw chain (10) has a head area (35) which is formed by the at least one cutting tooth (55, 58), wherein the distance (f) between the head area (35) and the side wall (41) from the first deflection area (26) as far as entry into the guide track (9) is less than approximately 5 mm.

12. Power tool according to one of claims 9 to 11,
**characterised in that** the saw chain (10) has a connection region (36), in which the links of the saw chain (10) are interconnected in an articulated manner, wherein the distance (g) of the connection region (36) to the side wall (41) from the first deflection area (26) as far as entry into the guide track (9) is less than approximately 6 mm.

13. Power tool according to one of claims 9 to 12,
**characterised in that** the distance (i) of an end face (37) of the drive shaft (19) of the drive motor (11) to the side wall (41) is less than approximately 5 mm.

14. Power tool according to one of claims 1 to 13,
**characterised in that** a filling element (15) is arranged on the chain wheel cover (8) which at least partially defines the chain wheel space (44).

15. Power tool according to one of claims 1 to 14,
**characterised in that** a slide rail (43) is arranged on the chain wheel cover (8) which laterally guides the saw chain (10) at the entry into the guide track (9), wherein the chain wheel space (44) is at least partially defined by the slide rail (43).

## Revendications

1. Appareil de travail avec un carter (2) auquel est fixé un rail de guidage (9), étant précisé que l'appareil comporte un moteur d'entraînement (11) qui sert à entraîner dans un sens de marche (28) une scie à chaîne (10) guidée sur le rail de guidage (9), que la scie à chaîne (10) comporte au moins une dent de coupe (55, 58) qui forme un sommet (31) de la scie à chaîne (10), que le moteur d'entraînement (11) entraîne la scie à chaîne (10) par l'intermédiaire d'une roue à chaîne (22) qui est disposée dans un espace de roue à chaîne (44), que l'espace de roue à chaîne (44) est couvert par un capot pour roue à chaîne (8) et que ledit espace de roue à chaîne (44) comporte une paroi périphérique (40) qui le limite près du sommet (31) de la scie à chaîne (10), que l'espace de roue à chaîne (44) comporte une ouverture d'éjection (45) pour le produit coupé, qui débouche sur le sommet (31) de la scie à chaîne (10), que le rail de guidage (9) comporte un axe médian longitudinal (18) qui coupe la scie à chaîne (10) près de la roue à chaîne (22) dans une première zone de déviation (26), et près d'une pointe (46) du rail de guidage (9) dans une seconde zone de déviation (27), que la scie à chaîne (10) est entraînée dans un premier tronçon (29) dans le sens de marche (28) de la première zone de déviation (26) vers la seconde zone de déviation (27), et dans un second tronçon (30) de la seconde zone de déviation (27) vers la première zone de déviation (26), que la scie à chaîne (10) quitte l'espace de roue à chaîne (44) au niveau d'une ouverture de sortie (47) qui est disposée sur le premier tronçon (29), que l'ouverture d'éjection (45) débouche dans l'espace de roue à chaîne (44) avant la première zone de déviation (26), dans le sens de marche (28),
que l'écartement (b, c, d, e) entre la paroi périphérique (40) de l'espace de roue à chaîne (44) et le sommet (31) de la scie à chaîne (10), quand la scie à chaîne (10) est à l'arrêt, est de moins d'environ 18 mm sur toute la largeur (k) de la scie à chaîne (10), sur au moins 50% de la distance entre la première zone de déviation (26) et l'ouverture de sortie (47), qu'un conduit (48) s'étend entre la scie à chaîne (10) et la paroi périphérique (40),
**caractérisé en ce qu'**il est prévu au niveau de l'ouverture d'entrée (49) dans le conduit (48) un élément de guidage (16) qui guide le produit coupé vers l'ouverture d'éjection (45), étant précisé que l'élément de guidage (16) comporte une surface de guidage (61) qui limite l'ouverture d'éjection (45), et que la surface de guidage (61) est dirigée vers l'arrière et vers le bas par rapport à la position d'entreposage habituelle de l'appareil de travail, et guide les copeaux vers le sol.

2. Appareil de travail selon la revendication 1,
**caractérisé en ce que** l'écartement (b, c, d, e) est de moins d'environ 18 mm sur au moins 75% de la distance entre la première zone de déviation (26) et l'ouverture de sortie (47).

3. Appareil de travail selon la revendication 1 ou 2,
**caractérisé en ce que** l'écartement (b, c, d, e) est de moins d'environ 15 mm sur plus de 50% de la distance entre la première zone de déviation (26) et l'ouverture de sortie (47).

4. Appareil de travail selon l'une des revendications 1 à 3,
**caractérisé en ce que** l'écartement (a) entre le sommet (31) de la scie à chaîne (10) et la paroi périphérique (40), au niveau de la première zone de déviation (26), quand la scie à chaîne (10) est à l'arrêt, est de moins d'environ 10 mm, et en particulier de moins d'environ 5 mm.

5. Appareil de travail selon l'une des revendications 1 à 4,
**caractérisé en ce que** l'ouverture d'entrée (49) dans le conduit (48) est disposée avant la première zone de déviation (26), dans le sens de marche (28) de la scie à chaîne (10).

6. Appareil de travail selon l'une des revendications 1 à 5,
**caractérisé en ce que** l'angle (α) que définit la surface de guidage (61) de l'élément de guidage (16) au niveau de l'ouverture d'entrée (49) avec le sommet (31) de la scie à chaîne (10) est de plus de 90°.

7. Appareil de travail selon la revendication 6,
**caractérisé en ce que** l'angle (α) que définit la surface de guidage (61) de l'élément de guidage (16) au niveau de l'ouverture d'entrée (49) avec le sommet (31) de la scie à chaîne (10) est de plus de 110°.

8. Appareil de travail selon l'une des revendications 1 à 7,
**caractérisé en ce que** l'écartement (m) entre le sommet (31) de la scie à chaîne (10) et la paroi périphérique (40) au niveau de l'ouverture d'entrée (49), quand la scie à chaîne (10) est à l'arrêt, est de moins d'environ 20 mm.

9. Appareil de travail selon l'une des revendications 1 à 8,
**caractérisé en ce que** l'espace de roue à chaîne (44) est limité, sur le côté opposé au carter (2), par une paroi latérale (41).

10. Appareil de travail selon la revendication 9,
**caractérisé en ce que** l'écartement (f, g) entre la scie à chaîne (10) et la paroi latérale (41) quand la scie à chaîne (10) est à l'arrêt, est de moins d'environ 5 mm sur toute la hauteur (1) de la scie à chaîne (10), sur au moins 50% de la distance entre la première zone de déviation (26) et l'ouverture de sortie (47).

11. Appareil de travail selon la revendication 9 ou 10,
**caractérisé en ce que** la scie à chaîne (10) comporte une zone de tête (35) qui est formée par la ou les dents de coupe (55, 58), étant précisé que l'écartement (f) entre la zone de tête (35) et la paroi latérale (41), de la première zone de déviation (26) jusqu'à l'entrée dans le rail de guidage (9), est de moins d'environ 5 mm.

12. Appareil de travail selon l'une des revendications 9 à 11,
**caractérisé en ce que** la scie à chaîne (10) comporte une zone de liaison (36) dans laquelle les maillons de ladite scie (10) sont reliés entre eux de manière articulée, étant précisé que l'écartement (g) entre la zone de liaison (36) et la paroi latérale (41), de la première zone de déviation (26) jusqu'à l'entrée dans le rail de guidage (9), est de moins d'environ 6 mm.

13. Appareil de travail selon l'une des revendications 9 à 12,
**caractérisé en ce que** l'écartement (i) entre un côté frontal (37) de l'arbre d'entraînement (19) du moteur d'entraînement (11) et la paroi latérale (41) est de moins d'environ 5 mm.

14. Appareil de travail selon l'une des revendications 1 à 13,
**caractérisé en ce qu'**il est prévu sur le capot pour roue à chaîne (8) un élément de remplissage (15) qui limite au moins partiellement l'espace de roue à chaîne (44).

15. Appareil de travail selon l'une des revendications 1 à 14,
**caractérisé en ce qu'**il est prévu sur le capot pour roue à chaîne (8) une glissière (43) qui guide latéralement la scie à chaîne (10) au niveau de l'entrée dans le rail de guidage (9), étant précisé que l'espace de roue à chaîne (44) est limité au moins partiellement par la glissière (43).
